# EUROPÄISCHE PATENTSCHRIFT

(11) **EP 0 930 430 B1**
(45) Veröffentlichungstag und Bekanntmachung des Hinweises auf die Patenterteilung: **25.09.2002**
(21) Anmeldenummer: 98123694.6
(22) Anmeldetag: 12.12.1998
(51) Int. Cl.: F02M 35/10, F02M 31/07

(54) **Ansaugmodul für eine Brennkraftmaschine**
Intake module for a combustion engine
Module d'admission pour moteur à combustion

(30) Priorität: 21.01.1998 DE 19802074
(43) Veröffentlichungstag der Anmeldung: 21.07.1999
(73) Patentinhaber: Volkswagen Aktiengesellschaft, 38436 Wolfsburg (DE)
(72) Erfinder: Söhlke, Günter Dipl.-Ing., 38518 Gifhorn (DE); Lagies, Dietmar Dipl.-Ing., 38448 Wolfsburg (DE); Kirchner, Michael Dipl.-Designer, 38446 Wolfsburg (DE); Jahrens, Hans-Ulrich Dipl.-Ing., 38120 Braunschweig (DE); Erfurt, Jakob Dipl.-Ing., 38468 Ehra-Lessien (DE)

(56) Entgegenhaltungen:
- DE-A- 4 402 048
- DE-A- 4 403 219
- DE-C- 417 857
- FR-A- 2 520 811
- US-A- 2 987 138
- US-A- 4 058 099

## Beschreibung

Die Erfindung betrifft ein Ansaugmodul für eine Brennkraftmaschine, gemäß dem Oberbegriff des Anspruchs 1.

Aus der DE 44 02 048 A1 ist ein integriertes Ansaugsystem, insbesondere für die Verbrennungsluft einer Brennkraftmaschine bekannt. Dieses Ansaugsystem besteht aus einem Kunststoffgehäuse, einem Luftansaugrohr, einem Luftfilter und elektrischen und/oder mechanischen Komponenten. Das Gehäuse ist in Mehrschalentechnik aufgebaut und besteht aus wenigstens einem Unter- und einem Oberteil, wobei die Trennebene zwischen Unter- und Oberteil entlang der Ansaugrohre verläuft. In dem Oberteil ist der Luftfilter angeordnet. Ein Deckel auf dem Oberteil verschließt den rohluftseitigen Luftraum und fixiert den Luftfilter.

Die DE 44 03 219 A1 beschreibt eine als Baueinheit vorgefertigtes Saugmodul für eine Mehrzylinder-Brennkraftmaschine, in dem Einspritzventile integriert sind. Das Saugmodul ist an einen Zylinderkopf der Brennkraftmaschine anflanschbar und umfaßt ein geteiltes Gehäuse mit einem Unterteil, einem abdichtend mit diesem verbundenen Oberteil und mindestens einem Lufteinlaß, der über einen Ansaugkanal mit mehreren Luftrohren mit Auslaßöffnung verbunden ist, wobei zur Kraftstoffeinspritzung in den Luftstrom die Einspritzventile innerhalb des Gehäuses benachbart zu den Auslaßöffnungen der Luftrohre angeordnet sind. Innerhalb des Gehäuses des Ansaugmoduls ist ein Ansaugluftfilter zwischen einer Rohluftseite und einer Reinluftseite angeordnet, wobei der reinluftseitige Teil des Ansaugkanals nebst Luftsammelkanal und mindestens vom Luftsammelkanal wegführende Abschnitte der Luftrohre im Oberteil des Gehäuses eingeformt sind.

Aus der DE 417 857 bzw. der US 2 987 138 ist ein Luftfilter mit einem Rohluftansaugstutzen bekannt, wobei der Rohluftansaugstutzen einen Rohluftkanal, einen davon getrennten Warmluftkanal sowie einen Drehschieber bzw. eine Schaltklappe aufweist, welcher wahlweise den Warmluftkanal oder den Rohluftkanal mit dem Luftfilter verbindet.

Diese bekannten Anordnungen haben jedoch den Nachteil, daß sie für den jeweiligen Einsatz bzw. die jeweilige Brennkraftmaschine und deren Einbauumgebung sehr speziell ausgebildet sind, d.h. für verschiedene Einbaulagen einer mit den bekannten Ansaugsystemen auszustattenden Brennkraftmaschine, beispielsweise bei verschiedenen Fahrzeugmodellen, jeweils ein spezielles Ansaugsystem zu konzipieren und herzustellen ist.

Der vorliegenden Erfindung liegt die Aufgabe zugrunde, ein verbessertes Ansaugmodul der obengenannten Art zur Verfügung zu stellen, welches einfach herstellbar ist und eine Vielzahl von Komponenten in noch besser integrierter Weise beinhaltet.

Diese Aufgabe wird erfindungsgemäß durch ein Ansaugmodul der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, daß die Rohluftansaugöffnung (16) bezüglich wenigstens einer Längserstreckung des Ansaugmoduls mittig angeordnet ist und daß der Rohluftansaugstutzen (10) derart umschlagbar ausgebildet ist, daß eine Rohluftansaugung wahlweise an verschiedenen Seiten des Ansaugmoduls erfolgt.

Dies hat den Vorteil, daß bei hoher Integration von an der Brennkraftmaschine benötigten Teile in einem einzigen Modul auf einfache Weise und ohne bauliche Veränderungen am Ansaugmodul selbst durch entsprechende Ausbildung des Rohluftansaugstutzens eine Rohluftansaugung von verschiedenen Seiten des Ansaugmoduls zu realisieren, beispielsweise sowohl rechts- als auch linksseitig, so daß für verschiedene Fahrzeugmodelle dasselbe Ansaugmodul mit lediglich modifiziertem Rohluftansaugstutzen verwendbar ist. Dies reduziert für eine Serienproduktion in vorteilhafter Weise Kosten sowie einen entsprechenden Lager-, Logistik- und Dispositionsaufwand. Dadurch ist kein zusätzliches oder verändertes Bauteil für unterschiedliche Ansaugrichtungen erforderlich.

In einer besonders bevorzugten Ausführungsform ist das Mittel zum wahlweise Öffnen bzw. Schließen des Kaltluftkanals und des Warmluftkanals eine an einem stromabseitigen Ende einer Trennwandung zwischen Kaltluftkanal und Warmluftkanal angelenkte Warmluftregelklappe, welche zweckmäßigerweise von einem Regelthermostat angesteuert ist.

Eine einfache und schnelle Montage erzielt man dadurch, daß der Warmluftansaugstutzen derart angeordnet ist, daß er bei auf die Brennkraftmaschine aufgesetztem Ansaugmodul berührungslos in ein Warmluftblech, insbesondere an einem Abgaskrümmer der Brennkraftmaschine, taucht. Dies macht zusätzliche Schlauchverbindungen und entsprechende Montageschritte entbehrlich.

Für eine besonders vorteilhafte Beeinflussung von gasdynamischen Vorgängen im Luftansaugkanal sind stromabseitig der Rohluftmischkammer zwei separate Rohluftkanäle angeordnet, wobei bevorzugt jeder der beiden Rohluftkanäle in eine separate Filterkammer mit jeweils darin angeordneten separaten Filtern mündet und in vorteilhafter Weise zwischen den beiden Filterkammern eine Reinluftkammer angeordnet ist, welche mit beiden Filterkammern verbunden ist. Zweckmäßigerweise ist ferner die Reinluftkammer mit einem Reinluftstutzen zum Verbinden mit einem Luftansaugflansch eines Zylinderkopfes der Brennkraftmaschine versehen.

Für eine hohe Integration des Ansaugmoduls ist zusätzlich an der Reinluftkammer eine Kurbelgehäuseentlüftungseinrichtung mit einem Anschlußschnorchel und einem Entlüftungsventil ausgebildet.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
- Fig. 1: eine bevorzugte Ausführungsform eines erfindungsgemäßen Ansaugmoduls in Aufsicht,
- Fig. 2: in einer Ansicht von unten,
- Fig. 3: in einer Vorderansicht in Richtung Q von Fig. 1,
- Fig. 4: in einer Seitenansicht in Richtung R von Fig. 1,
- Fig. 5: in einer Seitenansicht in Richtung T von Fig. 1,
- Fig. 6: in einer Schnittansicht Entlang Linie J-J von Fig. 2,
- Fig. 7: in einer Schnittansicht Entlang Linie K-K von Fig. 2,
- Fig. 8: in einer Schnittansicht Entlang Linie E-E von Fig. 2,
- Fig. 9: in einer Schnittansicht Entlang Linie N-N von Fig. 2,
- Fig. 10: in einer Schnittansicht Entlang Linie M-M von Fig. 2,
- Fig. 11: in einer Schnittansicht Entlang Linie C-C von Fig. 2,
- Fig. 12: in einer Schnittansicht Entlang Linie F-F von Fig. 2,
- Fig. 13: in einer Schnittansicht Entlang Linie H-H von Fig. 1,
- Fig. 14: in einer Schnittansicht Entlang Linie D-D von Fig. 2,
- Fig. 15: in einer Schnittansicht Entlang Linie G-G von Fig. 2,
- Fig. 16: in einer Schnittansicht Entlang Linie B-B von Fig. 1,
- Fig. 17: in einer Schnittansicht Entlang Linie Q-Q von Fig. 1,
- Fig. 18: in einer Schnittansicht Entlang Linie L-L von Fig. 1 und
- Fig. 19: in einer Schnittansicht Entlang Linie A-A von Fig. 1.

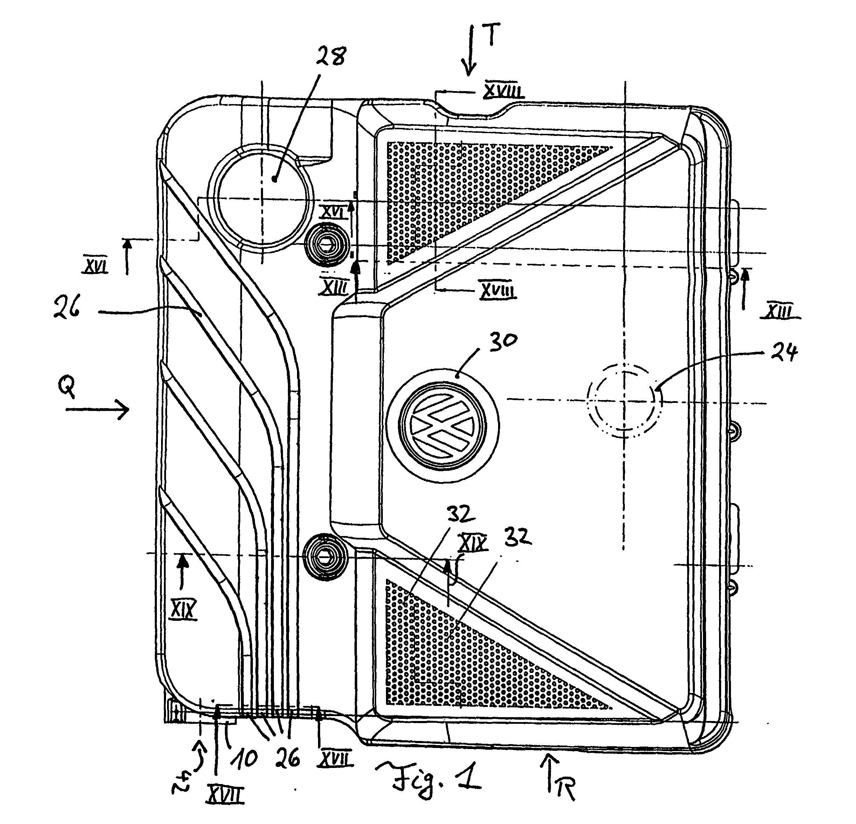

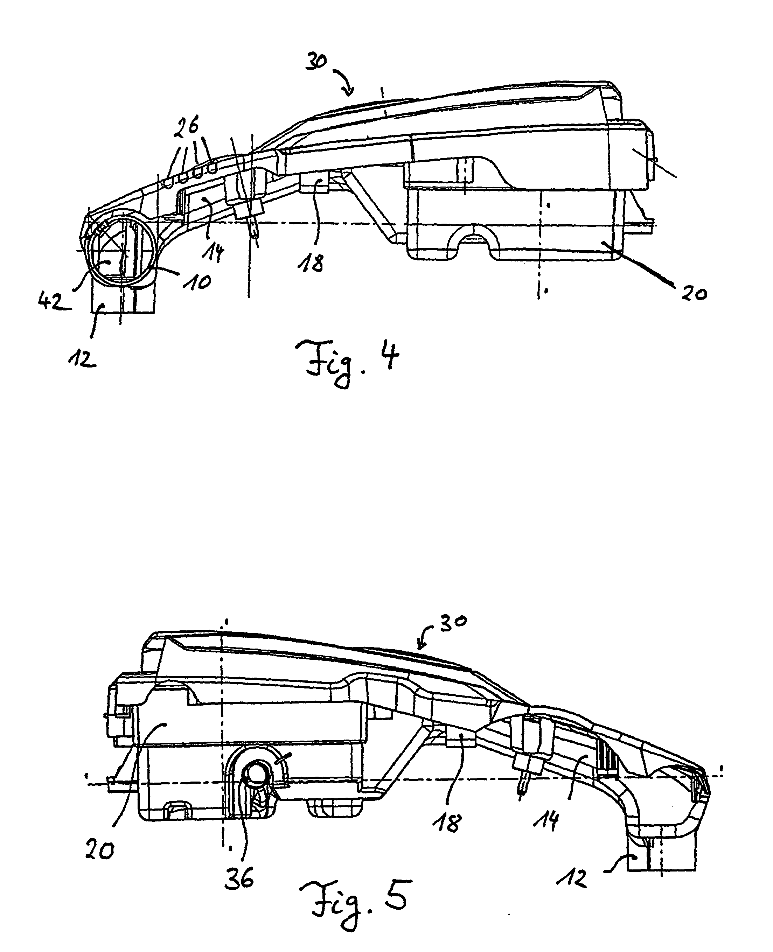

Die in Fig. 1 bis 5 dargestellte bevorzugte Ausführungsform eines erfindungsgemäßen Ansaugmoduls umfaßt einen Rohluftansaugstutzen 10 mit einem Warmluftansaugstutzen 12, eine Rohluftmischkammer 14, eine Rohluftansaugöffnung 16, zwei separate Rohluftkanäle 18, welche jeweils in eine separate Filterkammer 20 münden, und eine mit beiden Filterkammern 20 verbundenen Reinluftkammer 22, welche einen Reinluftstutzen 24 zum Anschluß an einen Anschlußflansch eines nicht dargestellten Zylinderkopfes einer Brennkraftmaschine aufweist.

Der Warmluftansaugstutzen 12 und der Reinluftstutzen 24 sind dabei bevorzugt derart angeordnet, daß diese Stutzen beim Montieren des Ansaugmoduls automatisch mit entsprechenden Anschlußflansche einer Warmluftzuführung bzw. des Zylinderkopfes verbunden sind. Befestigungsmittel 25 dienen zum beispielsweise schraubenden befestigen des Rohluftansaugstutzens 10 mit Rohluftmischkammer 14. Ein Verriegelungsmittel 27 am Rohluftansaugstutzen 10 dient ferner zum Arretieren des Ansaugmoduls in einer Einbauposition.

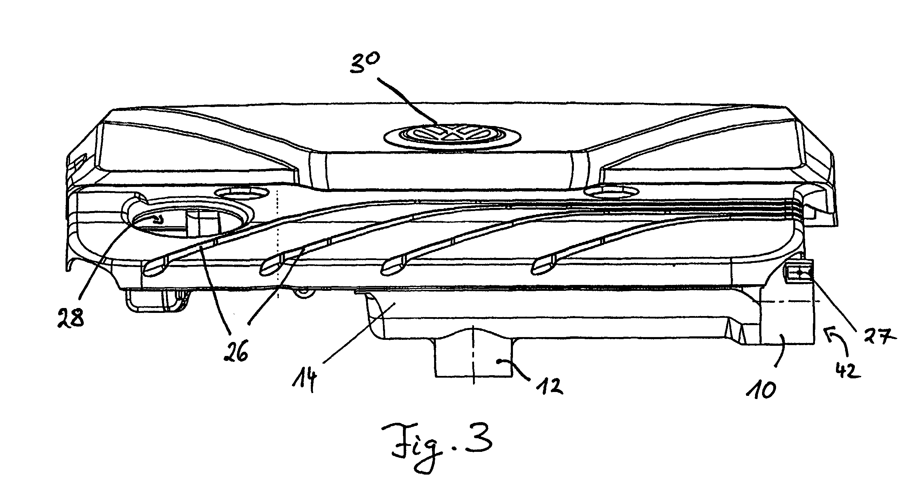

Auf der aus Fig. 1 und 3 ersichtlichen Oberseite des Ansaugmoduls sind Kabelführungen 26 ausgebildet, welche beispielsweise zum geordneten Führen von Zündverteilerkabeln dienen. Ferner ist eine Öffnung 28 vorgesehen, welche bei montiertem Ansaugmodul direkt über einer Öleinfüllöffnung des Zylinderkopfes liegt, so daß diese zugänglich bleibt und nicht vom Ansaugmodul verdeckt wird. Wie sich insbesondere aus Fig., 3 ergibt, ist das Ansaugmodul in seinen Dimensionen derart ausgebildet, daß es eine Brennkraftmaschine vollständig überdeckt, so daß ein geordnetes Erscheinungsbild des Motorraumes gewährleistet ist, welches andernfalls durch viele einzelne Anbauteile der Brennkraftmaschine mit entsprechenden Kabel- und Schlauchverbindungen gestört wäre. Ferner ist ein beispielsweise einfach einsteckend einrastendes Herstellerlogo 30 auf der Oberseite des Ansaugmoduls vorgesehen. Löcher bzw. Bohrungen 32 verleihen dem Ansaugmodul ein symmetrisches und wohlgefälliges Aussehen, beeinflussen akustische Eigenschaften des Ansaugmoduls positiv und dienen ggf. zusätzlich als Luftaustauschkanäle zwischen Unter- und Oberseite des Ansaugmoduls, sofern diese wenigstens teilweise durchgängig ausgebildet sind.

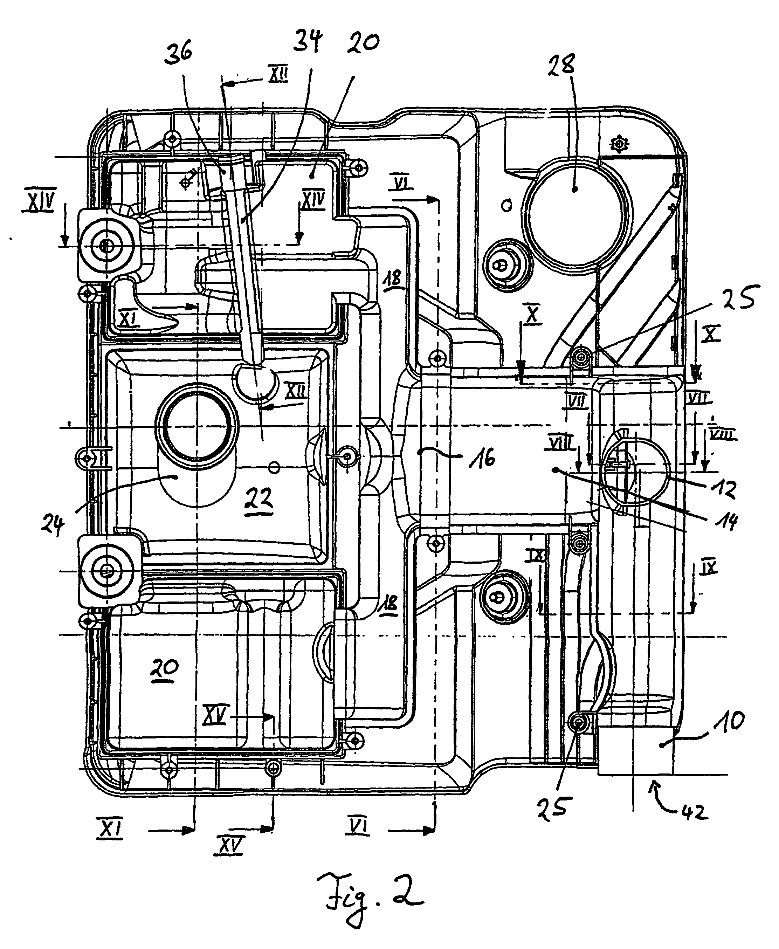

An der insbesondere aus Fig. 2 ersichtlichen Unterseite des Ansaugmoduls ist an der Reinluftkammer 22 zusätzlich ein Anschlußschnorchel 34 für eine Kurbelgehäuseentlüftung angeordnet, welcher sich parallel zum Ansaugmodul bis zu einer Seite erstreckt und an seinem Ende einen Anschlußflansch 36 aufweist. Wie sich ferner insbesondere aus Fig. 2 ergibt, erstrecken sich die Rohluftkanäle 18 von der Rohluftmischkammer 14 im wesentlichen U-förmig weg.

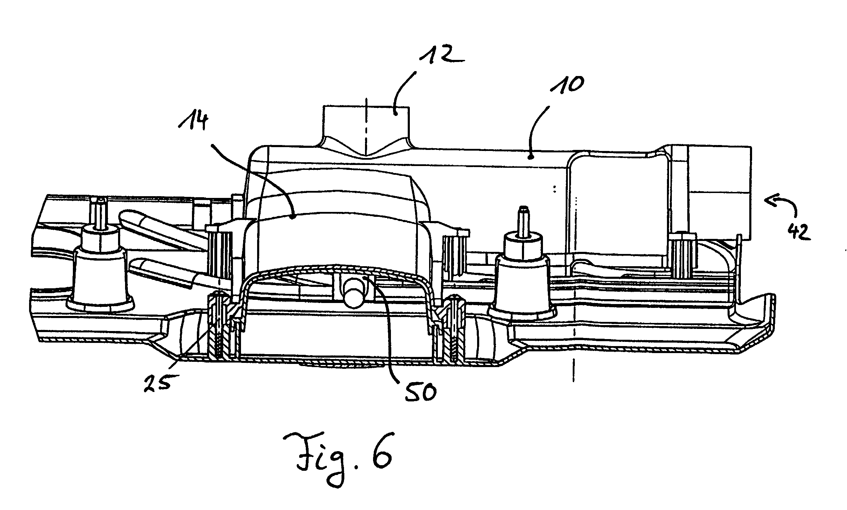

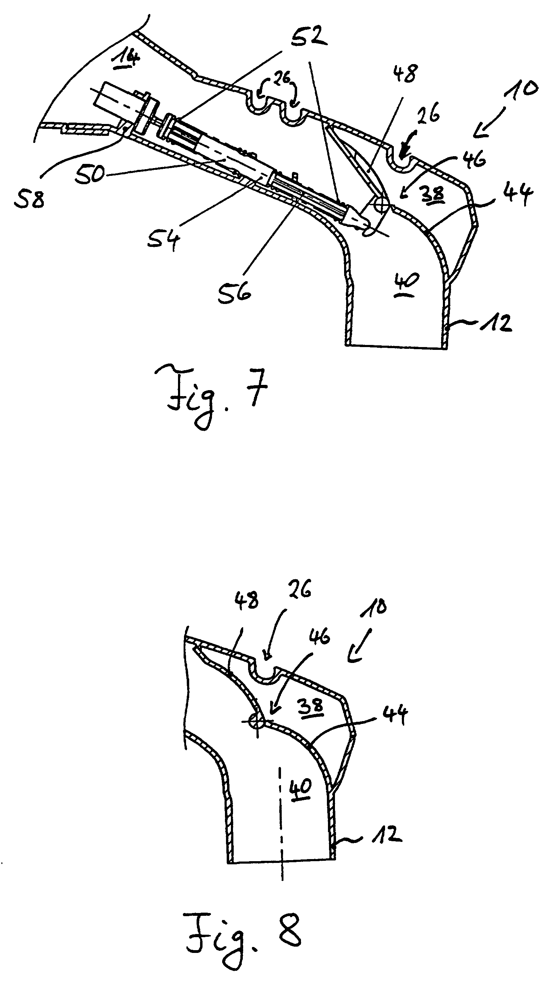

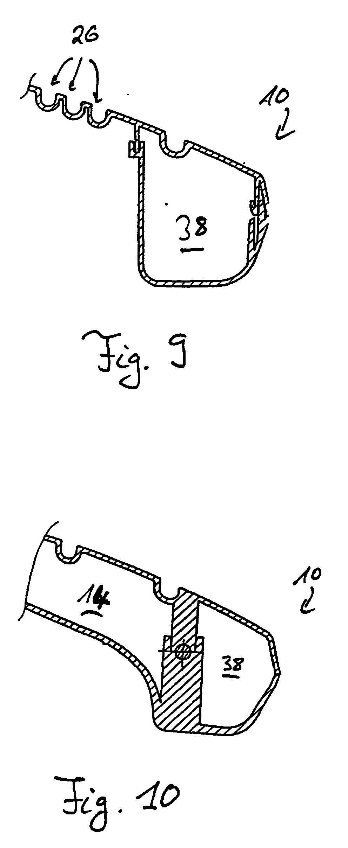

Fig. 6 bis 10 veranschaulichen in vergrößerter Darstellung die erfindungsgemäße Ausbildung des Rohluftansaugstutzens 10 mit Warmluftstutzen 12 und stromabseitiger Rohluftmischkammer 14. Wie sich insbesondere aus Fig. 7 und 8 ergibt sind in dem Rohluftansaugstutzen 10 ein Kaltluftkanal 38 und ein Warmluftkanal 40 ausgebildet. Der Kaltluftkanal 38 erhält kalte Rohluft von einer seitlichen Öffnung 42 des Rohluftansaugstutzens. Der Warmluftkanal 40 erhält vorgewärmte Rohluft über den Warmluftstutzen 12, beispielsweise dadurch, daß letzterer in ein Warmluftblech beispielsweise eines Abgaskrümmers berührungslos eintaucht. Eine Trennwandung 44 trennt innerhalb des Rohluftansaugstutzens 10 den Kaltluftkanal 38 vom Warmluftkanal 40.

An einem stromabseitigen Ende 46 der Trennwandung 44 ist eine Warmluftregelklappe 48 derart schwenkbar angelenkt, daß diese wahlweise den Warmluftkanal 40 oder den Kaltluftkanal 38 verschließt. In den Darstellung von Fig. 7 und 8 ist die Klappe 48 in einer Schließposition, in der sie den Kaltluftkanal 38 vollständig verschließt, so daß ausschließlich Warmluft aus dem Warmluftkanal 40 einströmt. Bei entsprechenden Mittelstellungen zwischen diesen beiden Schließpositionen erfolgt eine gemischte Zufuhr von Kaltluft und Warmluft, wobei sich das Mischungsverhältnis aus der jeweiligen Mittelstellung der Warmluftregelklappe 48 ergibt. In der Rohluftmischkammer 14 erfolgt dann eine Mischung der entsprechenden einströmenden Warm- und Kaltluftanteile.

Die Klappe 48 wird von einem Betätigungselement 50 verschwenkt, welches beispielsweise in Form eines Dehnstoffelementes ausgebildet ist. Das beispielhaft dargestellte Betätigungselement 50 umfaßt eine Druckfeder 52, eine Schubstange 54 und eine Führungsstange 56, wobei sich die Schubstange 54 an einer fest mit einer Gehäusewandung der Rohluftmischkammer 14 oder des Rohluftansaugstutzens 10 befestigten Halterung 58 abstützt.

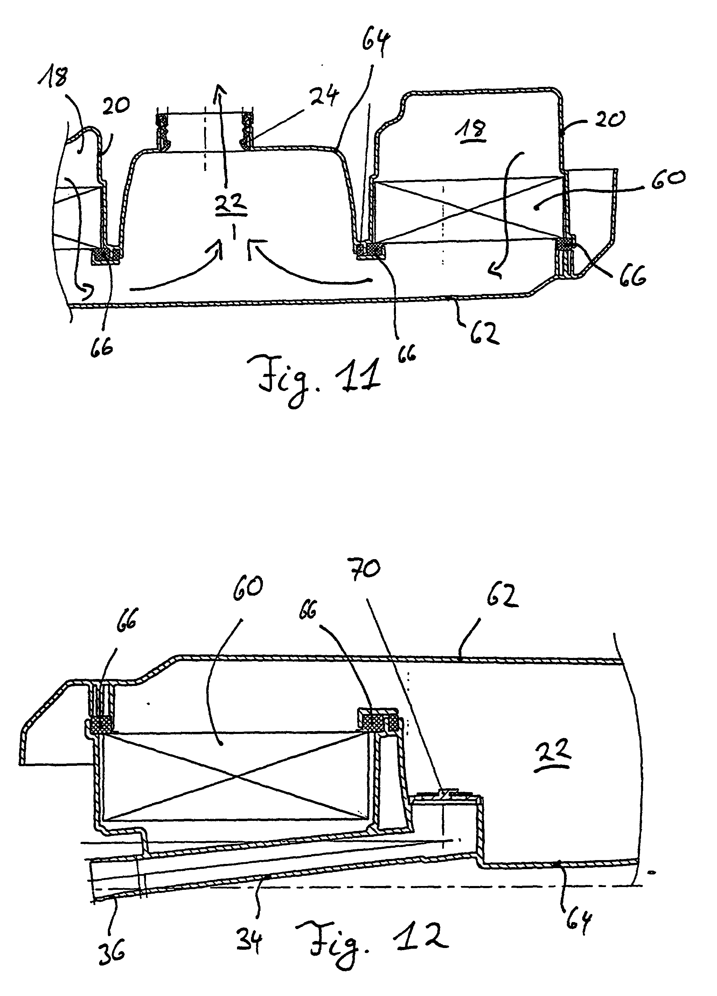

Fig. 11 bis 15 illustrieren den Bereich des Ansaugmoduls in denen die Filterkammern 20, die Reinluftmischkammer 22 und der Reinluftstutzen 24 angeordnet sind. In den Filterkammern 20 ist jeweils ein Luftfilter 60 angeordnet. Ein das Ansaugmodul bildendes Oberteil 62 sowie ein Unterteil 64 sind mittels einer Dichtung 66 dicht miteinander verbunden. Ferner schließen Oberteil 62 und Unterteil 64 zwischen sich die Rohluftkanäle 18 und die Reinluftmischkammer 22 ein. Von den Rohluftkanälen 18 durchströmt die angesaugte Luft die Luftfilter 60 in den jeweiligen Filterkammern 20. In der Reinluftkammer 22 werden die beiden Luftströme aus den beiden Filterkammern 20 miteinander gemischt, bevor sie über den Reinluftstutzen 24 das Ansaugmodul in Richtung Brennkraftmaschine verlassen. Dies ist in Fig. 11 mit entsprechende Pfeilen angedeutet.

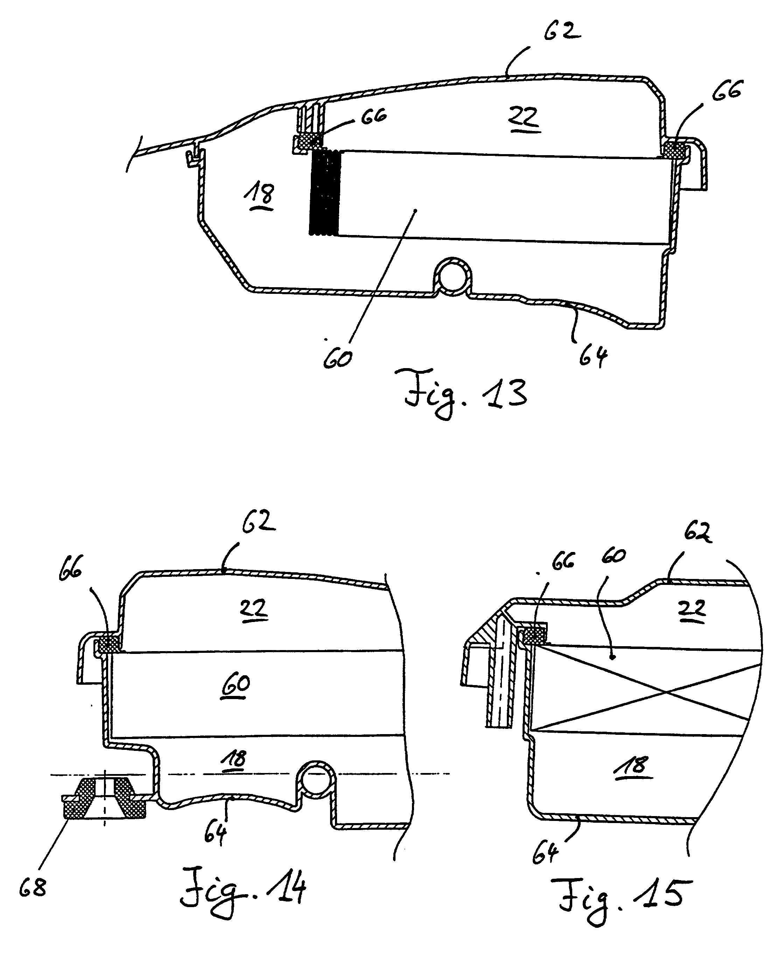

Aus Fig. 14 ist ein Befestigungsmittel 68 ersichtlich, welches zum Befestigen des Ansaugmoduls auf einer Brennkraftmaschine dient.

Fig. 12 zeigt die Anordnung des Anschlußschnorchels 34 mit Anschlußflansch 36 für die Kurbelgehäuseentlüftung an der Reinluftmischkammer 22. Hierzu ist der Schnorchel 34 über ein Entlüftungsventil 70 mit einem Innenraum der Reinluftkammer 22 verbunden.

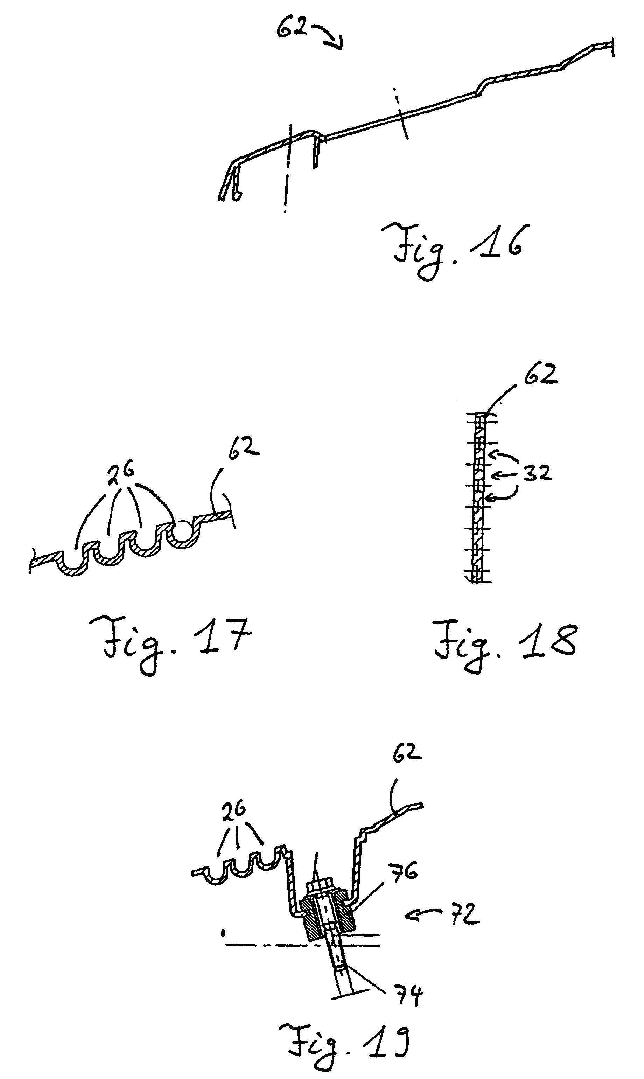

Fig. 16 veranschaulicht das abgesetzte Oberteil 62 im Schnitt. Fig. 17 illustriert in vergrößerter Schnittansicht die Kabelführungen 26 am Oberteil 62 des Ansaugmoduls. Fig. 18 zeigt im Schnitt die Bohrungen 32, welche teilweise durchgehende ausgebildet sind.

Fig. 19 veranschaulicht ein Befestigungsmittel 72, welches zum Befestigen des Ansaugmoduls auf einer Brennkraftmaschine dient und eine Schraube mit Hülse 74 und einen Gummipuffer 76 umfaßt.

## Patentansprüche

1. Ansaugmodul für eine Brennkraftmaschine, insbesondere für ein Kraftfahrzeug, mit einem darin ausgebildeten Luftansaugkanal, welcher stromauf in dieser Reihenfolge einen Rohluftansaugstutzen (10), eine Rohluftansaugöffnung (16), einen Rohluftkanal (18), einen Luftfilter (60), einen Reinluftkanal (22) und einen Reinluftstutzen (24) umfaßt, wobei der Rohluftansaugstutzen (10) neben einem Kaltluftkanal (38) mit einem zusätzlichen separaten Warmluftkanal (40) ausgebildet ist, welcher einen Warmluftansaugstutzen (12) aufweist, wobei am stromabseitigen Ende des Rohluftansaugstutzens (10) eine Rohluftmischkammer (14) ausgebildet ist, in der ein Mittel (48) zum wahlweise Öffnen bzw. Schließen des Kaltluftkanals (38) bzw. des Warmluftkanals (40) angeordnet ist, wobei die Rohluftansaugöffnung (16) bezüglich wenigstens einer Längserstreckung des Ansaugmoduls mittig angeordnet ist, **dadurch gekennzeichnet, daß** der Rohluftansaugstutzen (10) derart umschlagbar ausgebildet ist, daß eine Rohluftansaugung wahlweise an verschiedenen Seiten des Ansaugmoduls erfolgt.

2. Ansaugmodul nach Anspruch 1, **dadurch gekennzeichnet, daß** das Mittel (48) zum wahlweise Öffnen bzw. Schließen des Kaltluftkanals (38) bzw. des Warmluftkanals (40) eine an einem stromabseitigen Ende einer Trennwandung (44) zwischen Kaltluftkanal (38) und Warmluftkanal (40) angelenkte Warmluftregelklappe (48) ist.

3. Ansaugmodul nach Anspruch 2, **dadurch gekennzeichnet, daß** die Warmluftregelklappe (48) von einem Regelthermostat (50) angesteuert ist.

4. Ansaugmodul nach einem der vorhergehenden Ansprüche, **dadurch gekennzeichnet, daß** der Warmluftansaugstutzen (12) derart angeordnet ist, daß er bei auf die Brennkraftmaschine aufgesetztem Ansaugmodul berührungslos in ein Warmluftblech, insbesondere an einem Abgaskrümmer der Brennkraftmaschine, taucht.

5. Ansaugmodul nach einem der vorhergehenden Ansprüche, **dadurch gekennzeichnet, daß** stromabseitig der Rohluftmischkammer (14) zwei separate Rohluftkanäle (18) angeordnet sind.

6. Ansaugmodul nach Anspruch 5, **dadurch gekennzeichnet, daß** jeder der beiden Rohluftkanäle (18) in eine separate Filterkammer (20) mit jeweils darin angeordneten separaten Filtern (60) mündet.

7. Ansaugmodul nach Anspruch 6, **dadurch gekennzeichnet, daß** zwischen den beiden Filterkammern (20) eine Reinluftkammer (22) angeordnet ist, welche mit beiden Filterkammern (20) verbunden ist.

8. Ansaugmodul nach Anspruch 7, **dadurch gekennzeichnet, daß** die Reinluftkammer (22) mit einem Reinluftstutzen (24) zum Verbinden mit einem Luftansaugflansch eines Zylinderkopfes der Brennkraftmaschine versehen ist.

9. Ansaugmodul nach Anspruch 7 oder 8, **dadurch gekennzeichnet, daß** an der Reinluftkammer (22) eine Kurbelgehäuseentlüftungseinrichtung mit einem Anschlußschnorchel (34) und einem Entlüftungsventil (70) ausgebildet ist.

## Claims

1. Intake module for an internal combustion engine, in particular for a motor vehicle, with an air intake duct which is formed therein and which comprises upstream, in this order, a crude air intake support (10), a crude air intake orifice (16), a crude air duct (18), an air filter (60), a clean-air duct (22) and a clean-air support (24), the crude air intake support (10) being formed next to a cold-air duct (38) with an additional separate warm-air duct (40) which has a warm-air intake support (12), there being formed at the downstream end of the crude air intake support (10) a crude air mixing chamber (14), in which a means (48) for the selective opening and closing of the cold-air duct (38) or of the warm-air duct (40) is arranged, the crude air intake orifice (16) being arranged centrally with respect to at least one longitudinal extent of the intake module, **characterized in that** the crude air intake support (10) is designed to be reversible in such a way that a crude air intake takes place selectively on different sides of the intake module.

2. Intake module according to Claim 1, **characterized in that** the means (48) for the selective opening and closing of the cold-air duct (38) or of the warm-air duct (40) is a warm-air regulating flap (48) articulated at a downstream end of a partition (44) between the cold-air duct (38) and the warm-air duct (40).

3. Intake module according to Claim 2, **characterized in that** the warm-air regulating flap (48) is activated by a regulating thermostat (50).

4. Intake module according to one of the preceding claims, **characterized in that** the warm-air intake support (12) is arranged in such a way that it penetrates contactlessly into a warm-air plate, in particular on an exhaust manifold of the internal combustion engine, when the intake module is placed onto the internal combustion engine.

5. Intake module according to one of the preceding claims, **characterized in that** two separate crude air ducts (18) are arranged downstream of the crude air mixing chamber (14).

6. Intake module according to Claim 5, **characterized in that** each of the two crude air ducts (18) issues into a separate filter chamber (20) with separate filters (60) arranged in it in each case.

7. Intake module according to Claim 6, **characterized in that** a clean-air chamber (22), which is connected to both filter chambers (20), is arranged between the two filter chambers (20).

8. Intake module according to Claim 7, **characterized in that** the clean-air chamber (22) is provided with a clean-air support (24) for connection to an air intake flange of a cylinder head of the internal combustion engine.

9. Intake module according to Claim 7 or 8, **characterized in that** a crankcase venting device with a connecting snorkel (34) and with a venting valve (70) is formed on the clean-air chamber (22).

## Revendications

1. Module d'admission pour un moteur à combustion interne, en particulier pour un véhicule à moteur, avec un canal d'admission d'air formé dans celui-ci, qui comprend en amont dans cet ordre une tubulure d'admission d'air extérieur (10), un orifice d'admission d'air extérieur (16), un canal d'air extérieur (18), un filtre à air (60), un canal d'air pur (22) et une tubulure d'air pur (24), dans lequel la tubulure d'admission d'air extérieur (10) est formée, en plus d'un canal d'air froid (38), avec un canal d'air chaud séparé supplémentaire (40), qui présente une tubulure d'admission d'air chaud (12), dans lequel une chambre de mélange d'air extérieur (14) est formée à l'extrémité aval de la tubulure d'admission d'air extérieur (10), dans laquelle est disposé un moyen (48) pour l'ouverture, respectivement la fermeture au choix du canal d'air froid (38), respectivement du canal d'air chaud (40), dans lequel l'orifice d'admission d'air extérieur (16) est disposé au milieu par rapport au moins à une dimension longitudinale du module d'admission, **caractérisé en ce que** la tubulure d'admission d'air extérieur (10) a une forme variable, de telle manière qu'une admission d'air extérieur se produise au choix en différents endroits du module d'admission.

2. Module d'admission suivant la revendication 1, **caractérisé en ce que** le moyen (48) pour l'ouverture, respectivement la fermeture au choix, du canal d'air froid (38), respectivement du canal d'air chaud (40), est un clapet de réglage d'air chaud (48) articulé sur une extrémité aval d'une paroi de séparation (44) entre le canal d'air froid (38) et le canal d'air chaud (40).

3. Module d'admission suivant la revendication 2, **caractérisé en ce que** le clapet de réglage d'air chaud (48) est activé par un thermostat de réglage (50).

4. Module d'admission suivant l'une quelconque des revendications précédentes, **caractérisé en ce que** la tubulure d'admission d'air chaud (12) est disposée de telle manière que, lorsque le module d'admission est monté sur le moteur à combustion interne, elle plonge sans contact dans une tôle à air chaud, en particulier dans un coude d'échappement du moteur à combustion interne.

5. Module d'admission suivant l'une quelconque des revendications précédentes, **caractérisé en ce que** deux canaux d'air extérieur séparés (18) sont disposés en aval de la chambre de mélange d'air extérieur (14).

6. Module d'admission suivant la revendication 5, **caractérisé en ce que** chacun des deux canaux d'air extérieur (18) débouche dans une chambre de filtre séparée (20) avec chaque fois des filtres séparés (60) disposés dans celles-ci.

7. Module d'admission suivant la revendication 6, **caractérisé en ce qu'**une chambre d'air pur (22), qui est raccordée aux deux chambres de filtre (20), est disposée entre les deux chambres de filtre (20).

8. Module d'admission suivant la revendication 7, **caractérisé en ce que** la chambre d'air pur (22) est pourvue d'une tubulure d'air pur (24) pour la raccorder à une bride d'admission d'air d'une culasse du moteur à combustion interne.

9. Module d'admission suivant la revendication 7 ou 8, **caractérisé en ce qu'**un dispositif d'aération du carter de vilebrequin avec un schnorchel de raccordement (34) et une soupape d'évacuation (70) est formé sur la chambre d'air pur (22).
